# FASCICULE DE BREVET EUROPEEN

(11) **EP 0 949 102 B1**
(45) Date de publication et mention de la délivrance du brevet: **03.07.2002**
(21) Numéro de dépôt: 99400824.1
(22) Date de dépôt: 02.04.1999
(51) Int. Cl.: B60J 7/20

(54) **Malle arrière pour véhicule découvrable à toit repliable**
Heckkofferraum für Cabriofahrzeug mit Faltverdeck
Rear trunk for convertible vehicle with foldable top

(30) Priorité: 09.04.1998 FR 9804478
(43) Date de publication de la demande: 13.10.1999
(73) Titulaire: Société Européenne de Brevets Automobiles, 75011 Paris (FR)
(72) Inventeur: Queveau, Gérard, Le Pin, 79140 Cerizay (FR); Queveau, Paul, Montravers, 79140 Cerizay (FR); Guillez, Jean-Marc, Cirières, 79140 Cerizay (FR)
(74) Mandataire: Keib, Gérard

(56) Documents cités:
- FR-A- 1 579 464

## Description

La présente invention concerne une malle arrière pour véhicule découvrable à toit repliable, comprenant des moyens permettant une ouverture de cette malle, d'une part, pour le passage et le rangement du toit replié dans le coffre arrière et, d'autre part, pour l'accès à ce coffre pour le rangement de bagages (cf. par exemple FR-A-1 579 464, correspondant au préambule de la revendication indépendante).

Habituellement, la malle arrière d'un véhicule automobile s'ouvre de l'arrière vers l'avant, ce qui facilite le rangement des bagages.

Pour permettre le passage et le rangement du toit replié d'un véhicule découvrable, il est nécessaire de pouvoir ouvrir le coffre de l'avant vers l'arrière. Cependant, cette solution n'est pas commode pour le rangement des bagages.

Il a ainsi été proposé une malle arrière qui puisse s'ouvrir de l'arrière vers l'avant pour ranger les bagages et qui puisse s'ouvrir de l'avant vers l'arrière pour le passage et le rangement du toit replié du véhicule découvrable.

Cependant, la solution ci-dessus complique la réalisation de la malle arrière.

Le but de la présente invention est de créer une malle arrière de construction simple, n'ayant qu'un seul sens d'ouverture pour assurer les deux fonctions d'une manière optimale à savoir le passage et le rangement du toit replié et le rangement des bagages.

Suivant l'invention, cette malle arrière est caractérisée en ce que la malle est fixée de façon articulée à une partie du châssis du véhicule située sur l'un des côtés latéraux du coffre permettant l'ouverture de cette malle par simple rotation de la gauche vers la droite ou vice versa.

Selon une version préférée de l'invention, cette malle est reliée à ladite partie du châssis par deux pièces en forme de col de cygne dont l'une des extrémités est fixée près de l'un des bords latéraux de la malle et dont l'autre extrémité est fixée de façon articulée sur un palier solidaire de ladite partie du châssis.

De préférence, l'ouverture de la malle est commandée par un vérin électrique ou hydraulique.

Selon une version avantageuse de l'invention, l'ouverture de la malle est commandée par un vérin électrique solidaire de l'une des pièces en forme de col de cygne et d'une partie du châssis adjacente au fond du coffre.

D'autres particularités et avantages de l'invention apparaîtront encore dans la description ci-après.

Aux dessins annexés donnés à titre d'exemples non limitatifs :
- la figure 1 est une vue schématique en coupe longitudinale partielle d'un véhicule comportant une malle arrière selon l'invention ;
- la figure 2 est une vue arrière de la malle arrière selon l'invention ;
- la figure 3 est une vue suivant la direction F de la figure 1 montrant le système d'articulation et d'équilibrage vu en bout ;
- la figure 4 est une vue en perspective montrant le mécanisme de verrouillage ;
- la figure 5 est une vue de détail du mécanisme de verrouillage ;
- la figure 6 est une vue en coupe suivant le plan A de la figure 5 ;
- la figure 7 est une vue en coupe suivant le plan B de la figure 5 ;
- la figure 8 représente le détail de l'articulation.

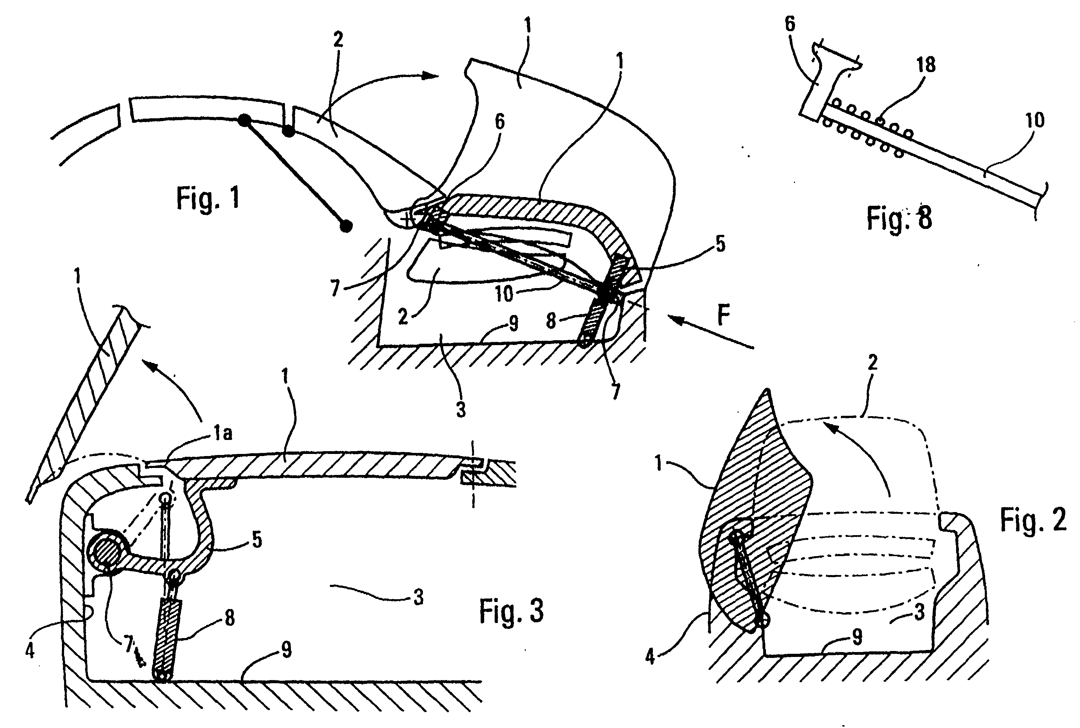

En référence à la figure 1, la malle arrière 1 du véhicule découvrable à toit repliable 2, comprend des moyens permettant une ouverture de cette malle 1 d'une part pour le passage et le rangement du toit replié 2 dans le coffre arrière 3 et d'autre part pour l'accès à ce coffre 3 pour le rangement de bagages.

Conformément à l'invention, la malle 1 est fixée de façon articulée à une partie 4 du châssis du véhicule située sur l'un des côtés latéraux du coffre 3 permettant l'ouverture de cette malle 1 par simple rotation de la droite vers la gauche ou vice versa, comme montré notamment par les figures 2 et 3.

Dans l'exemple représenté, la malle 1 est reliée à la partie 4 du châssis par deux pièces 5, 6 en forme de col de cygne dont l'une des extrémités est fixée près de l'un la des bords latéraux de la malle 1 et dont l'autre extrémité est fixée de façon articulée sur un palier 7 solidaire de la partie 4 du châssis.

Le système d'articulation ci-dessus peut être complété (voir figure 8) par un ressort 18 ou tout autre système du type vérin de compensation pour équilibrer la malle.

L'ouverture de la malle 1 est commandée par un vérin électrique 8 ou hydraulique.

Dans l'exemple représenté, le vérin électrique 8 est solidaire de l'une 5 des pièces en forme de col de cygne et d'une partie du châssis adjacente au fond 9 du coffre 3.

Comme montré par la figure 1, les deux cols de cygne 5 sont reliés entre eux par un arbre 10 qui maintient la malle 1 en torsion.

La malle 1 est maintenue fermée au moyen d'un verrou 11 situé sur le côté opposé à celui de l'articulation de la malle, ou situé à l'arrière du véhicule.

Ce verrou 11 est commandé par un bouton-poussoir 12 accessible de l'extérieur.

Ce bouton-poussoir 12 commande mécaniquement par un câble 13 ou électriquement le déverrouillage du verrou 11 et simultanément l'actionnement du vérin électrique 8 qui commande l'ouverture de la malle.

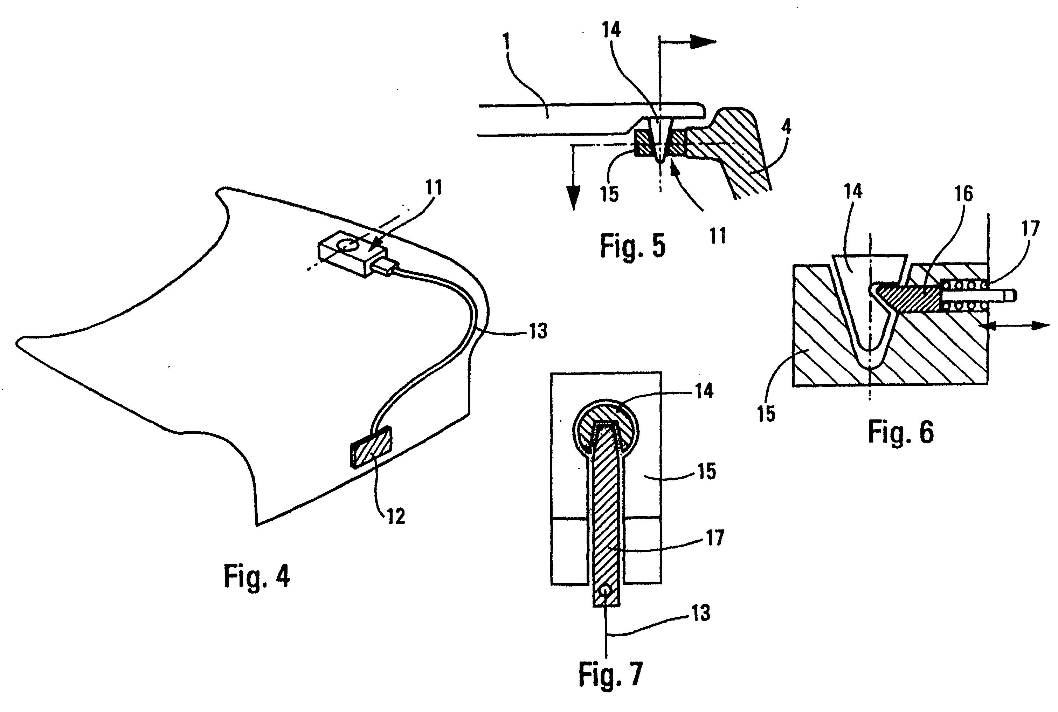

Le verrou 11 est composé (voir figure 5) d'un centreur 14 solidaire de la malle 1 qui s'engage dans un boîtier 15 solidaire du châssis 4.

Le centreur 14 actionne (voir figures 6 et 7) un doigt coulissant 16 dans un mouvement de translation et un ressort 17 qui bloque la malle 1.

On va maintenant expliquer le fonctionnement de la malle arrière que l'on vient de décrire.

Pour avoir accès au coffre du véhicule, on déverrouille le verrou 11 par le poussoir 12 et on soulève la malle 1 (en version manuelle) et on fait pivoter la malle sur le côté. Ce mouvement est assisté par le vérin 8.

En version électrique, le poussoir 12 commande simultanément le verrou 11 et le vérin électrique 8.

Lorsqu'on veut ranger le toit 2 dans le coffre arrière, on commande la malle 1 de la même façon que précédemment en version manuelle et par un bouton de commande à l'intérieur du véhicule en version électrique.

## Revendications

1. Malle arrière pour véhicule découvrable à toit repliable (2), comprenant des moyens permettant une ouverture de cette malle (1) d'une part pour le passage et le rangement du toit replié (2) dans le coffre arrière (3) et d'autre part pour l'accès à ce coffre (3) pour le rangement de bagages, **caractérisée en ce que** la malle (1) est fixée de façon articulée à une partie (4) du châssis du véhicule située sur l'un des côtés latéraux du coffre (3) permettant l'ouverture de cette malle (1) par simple rotation de la gauche vers la droite ou vice versa.

2. Malle arrière conforme à la revendication 1, **caractérisée en ce que** cette malle (1) est reliée à ladite partie (4) du châssis par deux pièces (5, 6) en forme de col de cygne dont l'une des extrémités est fixée près de l'un des bords latéraux de la malle (1) et dont l'autre extrémité est fixée de façon articulée sur un palier (7) solidaire de ladite partie (4) du châssis.

3. Malle arrière conforme à l'une des revendications 1 ou 2, **caractérisée en ce que** l'ouverture de la malle (1) est commandée par un vérin électrique (8) ou hydraulique.

4. Malle arrière conforme à la revendication 2, **caractérisée en ce que** l'ouverture de la malle (1) est commandée par un vérin électrique (8) solidaire de l'une (5) des pièces en forme de col de cygne et d'une partie (9) du châssis adjacente au fond du coffre (3).

5. Malle arrière conforme à l'une des revendications 2 à 4, **caractérisée en ce que** les deux cols de cygne (5) sont reliés entre eux par un arbre (10) qui maintient la malle (1) en torsion.

6. Malle arrière conforme à l'une des revendications 1 à 5, **caractérisée en ce qu'**elle est maintenue fermée au moyen d'un verrou (11) situé sur le côté opposé à celui de l'articulation ou situé à l'arrière du véhicule.

7. Malle arrière conforme à la revendication 6, **caractérisée en ce que** le verrou (11) est commandé par un bouton-poussoir (12).

8. Malle arrière conforme à la revendication 7, **caractérisée en ce que** le bouton-poussoir (12) commande électriquement le déverrouillage du verrou (11) et l'actionnement d'un vérin électrique (8) qui commande l'ouverture de la malle (1).

## Patentansprüche

1. Hinterkofferraumdeckel für ein Cabrio-Fahrzeug mit zusammenfaltbarem Dach (2) mit Vorrichtungen, welche ein Öffnen dieses Kofferraumdeckels (1) einerseits für den Durchlass und die Anordnung des gefalteten Dachs (2) in dem hinteren Kofferraum (3), und andererseits für den Zugang zu diesem Kofferraum (3) für die Unterbringung von Gepäck ermöglichen, **dadurch gekennzeichnet, dass** der Kofferraumdeckel (1) in gelenkiger Weise an einem Bereich (4) des Chassis des Fahrzeugs befestigt ist, der sich auf der einen der Seitenkanten des Kofferraums (3) befindet, was das Öffnen dieses Kofferraumdeckels (1) durch einfache Drehung von links nach rechts oder umgekehrt ermöglicht.

2. Hinterkofferraumdeckel gemäß Anspruch 1, **dadurch gekennzeichnet, dass** dieser Kofferraumdeckel (1) an dem Bereich (4) des Chassis durch zwei Teile (5, 6) in Form eines C-Gestells befestigt ist, dessen eines Ende nahe der einen der Seitenkanten des Kofferraumdeckels (1) und dessen anderes Ende in gelenkiger Weise auf einem einstückig mit dem Bereich (4) des Chassis ausgebildeten Lager (7) befestigt ist.

3. Hinterkofferraumdeckel gemäß einem der Ansprüche 1 oder 2, **dadurch gekennzeichnet, dass** das Öffnen des Kofferraumdeckels (1) durch einen elektrischen (8) oder hydraulischen Stellantrieb gesteuert wird.

4. Hinterkofferraumdeckel gemäß Anspruch 2, **dadurch gekennzeichnet, dass** das Öffnen des Kofferraumdeckels (1) von einem elektrischen Stellantrieb (8) gesteuert wird, der einstückig mit dem einen (5) der Teile in Form eines C-Gestells und einem Bereich (9) des Chassis, der an den Boden des Kofferraums (3) angrenzt, ausgebildet ist.

5. Hinterkofferraumdeckel gemäß einem der Ansprüche 2 bis 4, **dadurch gekennzeichnet, dass** die beiden C-Gestelle (5) miteinander durch eine Welle (10) verbunden sind, welche den Kofferraumdeckel (1) in Verdrehung hält.

6. Hinterkofferraumdeckel gemäß einem der Ansprüche 1 bis 5, **dadurch gekennzeichnet, dass** er mittels eines Riegels (11) geschlossen gehalten wird, der auf der Seite angeordnet ist, welche derjenigen der Gelenkanbringung gegenüberliegt, oder der im hinteren Bereich des Fahrzeugs angeordnet ist.

7. Hinterkofferraumdeckel gemäß Anspruch 6, **dadurch gekennzeichnet, dass** der Riegel (11) von einem Druckknopf (12) gesteuert wird.

8. Hinterkofferraumdeckel gemäß Anspruch 7, **dadurch gekennzeichnet, dass** der Druckknopf (12) elektrisch die Entriegelung des Riegels (11) und die Betätigung eines elektrischen Stellantriebs (8) steuert, der das Öffnen des Kofferraumdeckels (1) steuert.

## Claims

1. A boot lid for a convertible-type vehicle with folding roof (2), including means allowing this boot lid (1) to be opened on the one hand so that the folded roof (2) can move into the boot (3) for stowing, and on the other hand for accessing said boot (3) for stowing luggage, **characterized in that** the boot lid (1) is fixed in an articulated manner to a part (4) of the vehicle's chassis which is located on one side of the boot (3) allowing this boot lid (1) to be opened by simple rotation from the left towards the right or vice versa.

2. A boot lid according to Claim 1, **characterized in that** this boot lid (1) is linked to said part (4) of the chassis by two swan-neck-shaped components (5, 6), one end of the swan neck being fixed close to one of the side edges of the boot lid (1) and the other end being fixed in an articulated manner to a bearing (7) which is firmly attached to said part (4) of the chassis.

3. A boot lid according to one of Claims 1 or 2, **characterized in that** opening of the boot lid is controlled by an electric or hydraulic jack (8).

4. A boot lid according to Claim 2, **characterized in that** opening of the boot lid (1) is controlled by an electric jack (8) which is firmly attached to one (5) of the swan-neck-shaped components and to a part (9) of the chassis adjacent to the back of the boot (3).

5. A boot lid according to one of Claims 2 to 4, **characterized in that** the two swan necks (5) are linked together by a shaft (10) which keeps the boot lid (1) under torsion.

6. A boot lid according to one of Claims 1 to 5, **characterized in that** it is kept closed by means of a bolt (11) located on the side opposite that of the articulation or located at the rear of the vehicle.

7. A boot lid according to Claim 6, **characterized in that** the bolt (11) is controlled by a push-button (12).

8. A boot lid according to Claim 7, **characterized in that** the push-button (12) electrically controls the releasing of the bolt (11) and the operation of an electric jack (8) which controls the opening of the boot lid (1).
